# EUROPÄISCHE PATENTSCHRIFT

(11) **EP 1 958 759 B1**
(45) Veröffentlichungstag und Bekanntmachung des Hinweises auf die Patenterteilung: **10.08.2011**
(21) Anmeldenummer: 07002984.8
(22) Anmeldetag: 13.02.2007
(51) Int. Cl.: B29C 59/00, B60R 21/215, B29C 65/02

(54) **Verfahren zur Herstellung einer Airbagabdeckung**
Method for the production of an airbag cover
Procédé de fabrication d'un recouvrement d'airbag

(43) Veröffentlichungstag der Anmeldung: 20.08.2008
(73) Patentinhaber: PEGUFORM GMBH, 79268 Bötzingen (DE)
(72) Erfinder: Forsthofer, Konrad, 93352 Rohr/Laaberberg (DE); März, Hermann, 93326 Abensberg (DE); Berger, Oliver, 84048 Mainburg (DE)
(74) Vertreter: Patentanwälte Westphal, Mussgnug & Partner

(56) Entgegenhaltungen:
- WO-A2-2005/036370
- DE-A1- 4 209 522
- DE-A1- 10 240 439
- DE-B3-102004 008 726
- JP-A- 10 119 690

## Beschreibung

Die vorliegende Erfindung betrifft ein Verfahren zur Herstellung eines Kunststoffformteils, insbesondere einer Instrumententafel, Seitenverkleidung oder Holmverkleidung für ein Kraftfahrzeug, mit einer integrierten Airbagabdeckung, die durch Sollbruchlinien auf der Rückseite des Kunststoffformteils begrenzt ist.

Formteile für Kraftfahrzeuge, wie z. B. Instrumententafeln, Seitenverkleidungen oder Holmverkleidungen, sind üblicherweise in mehreren Schichten aufgebaut und bestehen zumindest aus einer Formhautschicht oder Dekorschicht sowie einer Trägerschicht. Bei hochwertigen Einbauteilen für Kraftfahrzeuge ist in der Regel zwischen der Dekorschicht und der Trägerschicht noch eine Zwischenschicht angeordnet, die häufig als Polyurethanschaum ausgeführt ist.

Ein derartig aufgebautes Formteil wird beispielsweise in der DE 10 2004 030 786 A1 beschrieben.

Wenn das Kunststoffformteil im eingebauten Zustand im Kraftfahrzeug einen Airbag abdeckt, so wird die dafür erforderliche Öffnung durch entsprechende Sollbruchlinien oder Perforationslinien auf der Rückseite des Kunststoffformteils vorgezeichnet, wobei die Sollbruchlinien so ausgeführt sind, dass sie auf der zum Fahrzeuginnenraum weisenden Seite der Dekorfolie nicht zu erkennen sind. Es ist eine übliche Praxis, dass zunächst die entsprechenden Sollbruchlinien auf der Rückseite der Dekorfolie eingearbeitet werden, wozu eine Fräse, eine stillstehende oder oszillierende Klinge, ein Heißmesser oder auch ein Laserstrahl eingesetzt werden kann.

Das Schneiden der Sollbruchlinie kann mittels Ultraschall erfolgen, wobei mit einer skalpellartigen Klinge an der rückseitigen Oberfläche der Dekorschicht geschnitten wird oder der Schnitt kann mittels eines gepulsten Laserstrahls gesetzt wird. Es ist jedoch auch möglich, die Sollbruchstelle mittels einer Ziehklinge einzubringen.

Beim anschließenden Hinterschäumen der Dekorfolie, beispielsweise mit Polyurethanschaum, kann durch Eindringen des Polyurethans der Einschnitt in der Dekorfolie verkleben, so dass die Gefahr besteht, dass die Airbagfunktion verloren geht.

Eine bekannte Lösung für dieses Problem besteht darin, in den Schnitt ein Trennmittel einzubringen, das ein Verkleben verhindert. So ist in der DE 202 15 642 U1 ein Schneidwerkzeug für das Schneiden von thermoplastischen Materialien beschrieben, wobei gleichzeitig mit der Durchführung des Schnitts durch das Schneidmesser ein Trennmittel zugeführt wird, womit ein Verkleben der Ränder des Schnitts verhindert werden soll. Eine entsprechende Anordnung ist jedoch relativ aufwendig und das Verfahren hat außerdem den Nachteil, dass das Trennmittel selber relativ teuer ist. Hinzu kommt, dass durch das Einbringen des Trennmittels die Gefahr besteht, dass es aufgrund einer Aufweitung der Sollbruchlinie zu Abzeichnungen auf der Dekoroberseite kommt.

Die DE 102 40 439 A1 beschreibt ein Verfahren, bei dem die Sollbruchlinie durch einen Abdeckfilm versiegelt wird, bevor das Bauteil hinterschäumt wird.

Die JP 10 119 690 A beschreibt ein Verfahren gemäß dem Oberbegriff des Anspruchs 1.

Gelöst wird diese Aufgabe durch ein Verfahren mit den Merkmalen des Anspruchs 1.

Danach besteht die Erfindung darin, dass die Dekorfolie, die auf die übliche Weise durch Folienziehen oder -gießen oder im Slushverfahren hergestellt wird, zunächst mit einer bekannten Schneidtechnik, wie z. B. Laserschneiden, Kalt- oder Heißschneiden oder Ultraschallschneiden, bearbeitet wird, um eine Sollbruchlinie auf der Dekorunterseite auszubilden. In einem anschließenden Arbeitsschritt wird dann die als Kerbe ausgebildete Sollbruchlinie durch eine thermische Behandlung versiegelt. Die Versiegelung muss dabei so ausgeführt werden, dass die sichere Airbagfunktion erhalten bleibt, d. h. dass lediglich eine oberflächliche Versiegelung oder Verschweißung der Sollbruchkerbe stattfindet, während die Sollbruchlinie selber im Wesentlichen unverändert erhalten bleibt und damit die Airbagfunktion gewährleistet ist. Voraussetzung dafür ist, dass eine schonende thermische Behandlung an der Oberfläche der Dekorrückseite durchgeführt wird, wobei eine thermische Tiefenwirkung vermieden werden muss, damit es nicht zu einem Verkleben der Sollbruchlinie kommt.

Eine vorteilhafte Ausführungsform sieht vor, dass die thermische Versiegelung mit Hilfe einer Heißluftdüse oder mit thermischer Strahlung durchgeführt wird, die vorzugsweise jeweils von einem Roboter gesteuert sind. Durch genaues Einstellen des Heißluftstroms bzw. der Strahlungsintensität, der Temperatur der Heißluft, des Abstands der Düse oder der Strahlungsquelle von der Dekoroberfläche sowie der Fahrgeschwindigkeit der Düse bzw. der Strahlungsquelle beim Versiegeln der Sollbruchlinie wird erreicht, dass sich lediglich im oberen Randbereich der Sollbruchlinie durch Aufschmelzen des thermoplastischen Materials der Dekorfolie eine Art Pfropfen ausbildet, der die Sollbruchlinie verschließt, ohne dabei die Sollbruchlinie zu verkleben.

Das Verfahren ist allgemein anwendbar für Dekorfolien aus thermoplastischem Material, das durch Wärmeeintrag wieder eingeschmolzen werden kann. Besonders geeignet ist es für thermoplastische Kunststoffe, wie z. B. Polyvinylchlorid, Polypropylen, Polyamid, Polyethylen, Polymethylmethacrylat, Polymethacrylat oder andere. Ein besonderer Vorteil des Verfahrens besteht darin, dass kein zusätzlicher Werkstoff benötigt wird, um die Sollbruchlinie zu versiegeln, da der Pfropfen zum Versiegeln der Sollbruchlinie vorzugsweise aus arteigenem Material gebildet wird.

Eine weitere Möglichkeit der thermischen Versiegelung besteht darin, die Unterseite der Dekorfolie im Bereich der Sollbruchstelle mit Hilfe eines Wärmeträgers, wie z. B. eines metallischen Heizelementes, oberflächlich zu behandeln. Auch in diesem Fall wird über die Temperatur, den Abstand und die Fahrgeschwindigkeit die Versiegelung so eingestellt, dass ein Verkleben der Sollbruchlinie vermieden wird und lediglich die Sollbruchlinie oberflächlich abgedeckt wird, so dass kein Schaum in die Perforation eindringen kann, wodurch ein Verkleben der Perforation bzw. Sollbruchlinie oder ein Auseinanderdrücken der beiden Schnittseiten bewirkt werden könnte, was zu einer Abzeichnung der Sollbruchstelle auf der Dekoroberseite bzw. einer Fehlfunktion des Airbags führen würde.

Nach der Versiegelung der Dekorfolie wird das Kunststoffformteil auf die übliche Weise fertiggestellt, indem die Dekorfolie hinterschäumt wird und dann mit einer formsteifen Trägerschicht verbunden wird. Als Schaumschicht wird dabei vorzugsweise Polyurethanschaum eingesetzt, es können jedoch auch beliebige andere Schäume eingesetzt werden.

Nach der Fertigstellung und dem Aushärten des Kunststoffformteils werden in die Schaum- und Trägerschicht ebenfalls Sollbruchstellen gefräst, wobei jedoch keine direkte Verbindung zwischen den Sollbruchlinien der Dekorschicht und denen der Schaum- und Trägerschicht realisiert wird, sondern die Perforierung der beiden inneren Schichten wird so ausgeführt, dass ein Steg aus Polyurethanschaum stehenbleibt und damit das Formteil im gesamten Schwächungsbereich soweit stabilisiert, um wiederum ein Abzeichnen der Sollbruchlinie auf der Dekoroberseite zu verhindern.

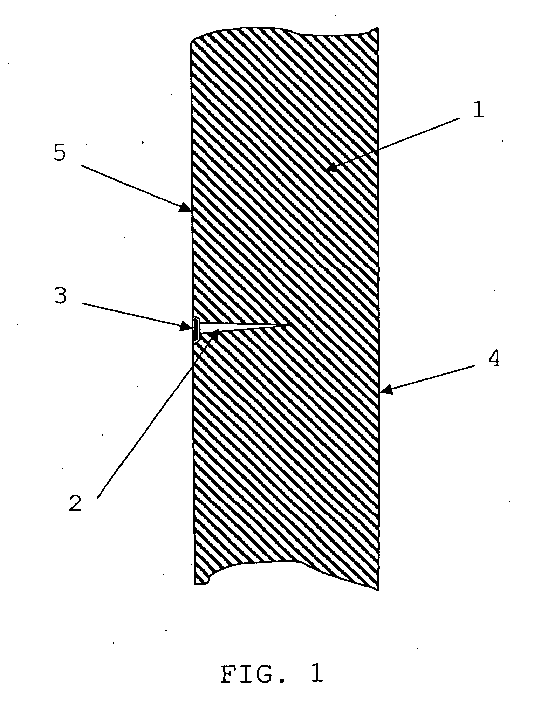

Im Folgenden wird die Erfindung anhand einer Zeichnung erläutert. Die Figur 1 zeigt einen Querschnitt einer Dekorfolie.

Die Dekorfolie besteht aus einer Dekoroberseite 4, die als Sichtseite in das Fahrzeuginnere zeigt und einer Dekorunterseite 5, die in Richtung Airbag angeordnet ist. Auf der Dekorunterseite 5 ist eine Sollbruchlinie 2 als Schnitt zu erkennen, der durch eine Versiegelung 3 verschlossen ist.

Die in Figur 1 gezeigte Ausführungsform zeigt die Anwendung der vorliegenden Erfindung auf eine einschichtige Dekorfolie, wie sie beispielsweise im einfachen Slushverfahren hergestellt wird. Darüber hinaus ist die Erfindung jedoch auch auf mehrschichtige Dekorfolien anwendbar, wie sie beispielsweise im Doppelslushverfahren hergestellt werden. Beim sogenannten Doppelslushverfahren wird auf der Dekorunterseite eine zusätzliche Schaumschicht ausgebildet, wodurch die gesamte Dekorfolie stabilisiert wird und gleichzeitig die Haptik der Dekorfolie verbessert wird. Auch bei der mehrschichtigen Ausführungsform ist die Dekorfolie in der Regel aus einem einzigen Materialtyp hergestellt, wobei lediglich die Verarbeitungsweise variiert wird und die Dekoroberseite dicht gestaltet wird, während die Dekorunterseite als poröser Schaum ausgeführt ist. Auch bei einer zweischichtigen Ausführung der Dekorfolie wird die thermische Versiegelung so durchgeführt, dass lediglich der Grenzbereich der Perforation oder Sollbruchlinie an der Dekorunterseite mit einer dünnen Schicht aus geschmolzenen, arteigenem Material verschlossen ist, wobei beispielsweise lediglich die Schaumschicht auf der Unterseite der Dekorfolie aufgeschmolzen sein kann.

Da die thermische Versiegelung eine sehr exakte Verfahrensführung verlangt, um ein Verkleben durch zu starke thermische Einwirkung zu vermeiden, sieht eine bevorzugte Ausführungsform des Verfahrens vor, dass die Versiegelung über einen Roboter gesteuert wird, mit dem Temperatur, Zeit und Geschwindigkeit des zur Versiegelung benutzten Werkzeugs, wie z.B. Heißluftdüse oder Heizelement, genau eingestellt werden.

### Bezugszeichenliste

- 1: Dekorfolie
- 2: Perforation oder Sollbruchlinie
- 3: Versiegelung
- 4: Dekoroberseite
- 5: Dekorunterseite

## Patentansprüche

1. Verfahren zur Herstellung eines Kunststoffformteils, umfassend die Schritte:
- Herstellen einer Dekorfolie (1) aus thermoplastischem Kunststoff;
- Ausbilden einer Sollbruchlinie (2) in Form eines Schnittes und/oder einer Perforation auf der Dekorunterseite (5) der Dekorfolie (1); und -Hinterschäumen der Dekorfolie (1), wobei die Sollbruchlinie (2) vor dem Hinterschäumen thermisch versiegelt wird, wobei die Versiegelung (3) der Sollbruchlinie (2) in der Dekorfolie (1) aus arteigenem Material gebildet wird,
**dadurch gekennzeichnet, dass** die thermische Versiegelung mit Hilfe einer Heißluftdüse oder einer Strahlungsquelle erfolgt, wobei die thermische Versiegelung über einem Roboter gesteuert wird, wobei lediglich eine oberflächliche Versiegelung oder Verschweißung der Sollbruchkerbe stattfindet, während die Sollbruchlinie selber im Wesentlichen unverändert erhalten bleibt und damit die Airbagfunktion gewährleistet ist, wobei sich lediglich im oberen Randbereich der Sollbruchlinie durch Aufschmelzen des thermoplastischen Materials der Dekorfolie eine Art Pfropfen ausbildet, der die Sollbruchlinie verschließt, ohne dabei die Sollbruchlinie zu verkleben.

2. Verfahren nach Anspruch 1,
**dadurch gekennzeichnet, dass** als Ausgangsmaterial für die Dekorfolie (1) ein thermoplastischer Kunststoff, wie z.B. Polyvinylchlorid (PVC), Polypropylen (PP), Polyamid (PA), Polyethylen (PE), Polymethylmethacrylat (PMMA), Polymethacrylat (PMA) o.a., eingesetzt wird.

3. Verfahren nach Anspruch 1 oder 2,
**dadurch gekennzeichnet, dass** als Schaum ein Polyurethanschaum eingesetzt wird.

## Claims

1. A method of producing a plastics material moulded part, comprising the steps:
- producing a decorative film (1) of thermoplastic plastics material;
- forming a nominal fracture line (2) in the form of a cut and/or a perforation on the underside (5) of the decorative film (1);
- arranging foam behind the decorative film (1), wherein the nominal fracture line (2) is thermally sealed before the arrangement of foam behind, wherein the sealing (3) of the nominal fracture line (2) in the decorative film (1) is formed from characteristic material,
**characterized in that** the thermal sealing is carried out with the aid of a hot air nozzle or a radiation source, wherein the thermal sealing is controlled by way of a robot, wherein only one surface sealing or welding of the nominal fracture notch is carried out, whilst the nominal fracture line itself remains substantially unchanged, thus ensuring the airbag function, wherein a sort of plug, which closes the nominal fracture line without sticking the nominal fracture line, is formed only in the upper edge region of the nominal fracture line by melting the thermoplastic plastics material of the decorative film.

2. A method according to claim 1, **characterized in that** a thermoplastic plastics material, such as for example polyvinyl chloride (PVC), polypropylene (PP), polyamide (PA), polyethylene (PE), polymethyl methacrylate (PMMA), polymethacrylate (PMA) or the like, is used as the starting material for the decorative film (1).

3. A method according to claim 1 or 2, **characterized in that** a polyurethane foam is used as the foam.

## Revendications

1. Procédé d'obtention d'un élément préformé en matériau synthétique comportant les étapes consistant à :
- fabriquer une feuille support d'imprégnation (1) en matériau synthétique thermoplastique,
- former une ligne de rupture de consigne (2) sous la forme d'une découpe et/ou d'une perforation sur la face arrière d'imprégnation (5) de la feuille support (1) ; et appliquer une mousse à l'arrière de la feuille support (1), la ligne de rupture de consigne (2) étant scellée thermiquement avant l'application de la mousse, le scellage (3) de la ligne de rupture de consigne (2) étant formé dans la feuille support (1) en un matériau adapté,
**caractérisé en ce que**
le scellage thermique est effectué à l'aide d'une buse à air chaud ou d'une source de rayonnement, ce scellage thermique étant commandé par un robot, et seul étant effectué un scellage ou un soudage superficiel de l'entaille de rupture de consigne, tandis que la ligne de rupture de consigne reste quant à elle essentiellement non modifiée de façon à garantir ainsi la fonction d'airbag, seul étant formé, dans la zone de bord supérieure de la ligne de rupture de consigne, par fusion du matériau thermoplastique de la feuille support, une sorte de bouchon qui ferme cette ligne de rupture de consigne sans ainsi la coller.

2. Procédé conforme à la revendication 1,
**caractérisé en ce qu'**
en tant que matière première pour la feuille support (1), on utilise un matériau thermoplastique tel que par exemple du chlorure de polyvinyle (PVC), du polypropylène (PP), du polyamide (PA), du polyéthylène (PE), du polyméthylméthacrylate (PMMA), du polyméthacrylate (PMA), ou similaires.

3. Procédé conforme à la revendication 1 ou à la revendication 2,
**caractérisé en ce qu'**
en tant que mousse, on met en oeuvre une mousse de polyuréthanne.
